# EUROPEAN PATENT SPECIFICATION

(11) **EP 3 996 355 B1**
(45) Date of publication and mention of the grant of the patent: **04.10.2023**
(21) Application number: 21197350.8
(22) Date of filing: 20.03.2014
(51) Int. Cl.: H04L 65/612, H04L 65/1094, H04N 21/41

(54) **METHOD FOR TRANSFERRING MEDIA STREAM AND USER EQUIPMENT**
VERFAHREN ZUR ÜBERTRAGUNG EINES MEDIENSTROMS UND BENUTZERGERÄT
PROCÉDÉ DE TRANSFERT DE FLUX MULTIMÉDIA ET ÉQUIPEMENT UTILISATEUR

(30) Priority: 26.03.2013 CN 201310100904
(43) Date of publication of application: 11.05.2022
(62) Divisional of application: 14774141.7
(73) Proprietor: Huawei Device Co., Ltd., Dongguan, Guangdong 523808 (CN)
(72) Inventor: FAN, Shunan, Shenzhen, 518129 (CN); GAO, Wenmei, Shenzhen, 518129 (CN); LV, Xiaoqiang, Shenzhen, 518129 (CN); WANG, Yahui, Shenzhen, 518129 (CN); JING, Hao, Shenzhen, 518129 (CN); JING, Ke, Shenzhen, 518129 (CN); HU, Bin, Shenzhen, 518129 (CN)
(74) Representative: Pfenning, Meinig & Partner mbB

(56) References cited:
- US-A1- 2004 034 723
- US-A1- 2012 060 100

## Description

### TECHNICAL FIELD

The present invention relates to communications technologies, and in particular, to a method for transferring a media stream and a user equipment.

### BACKGROUND

In the prior art, when a user opens a video page by using a browser of a first device to watch, and also expects to continue surfing the Internet by using another page at the same time, in one case, the user makes a size of each page decrease, so as to watch the video and continue browsing a web page at the same time; and in another case, the user migrates all screen images of the first device to a second device for playing, but cannot migrate content of only one page to the second device so as to continue browsing another page in the browser of the first device.

For a conventional web(Web)-based real time communication service, an additional plug-in needs to be downloaded and installed, and a real time communication service is completed by using an installed plug-in, such as QQ and MSN.

However, in existing Web-based real time communication (Real Time Communication, hereinafter referred to as RTC), an application programming interface (Application Programming Interface, hereinafter referred to as API) between a Web application and a browser is developed, so that a Web-based RTC application can run in the browser, thereby implementing end-to-end transmission of a message, audio, a video, or the like. For example, when a first user accesses, by using a browser, a website that provides a Web RTC service, the website returns a page of a Web-based RTC application to a terminal in which the first user is located, that is, the Web-based RTC application, such as Web QQ, starts. A second user also starts the foregoing Web RTC application simultaneously in a same manner, so that the first user and the second user may establish a relationship and communicate with each other.

When the first user and the second user perform real time communication in a Web manner, if the first user has multiple media stream input devices for collecting different media streams of the first user, such as audio, a video, and data, a video received by a browser of the second user is parsed and presented in a multi-image manner in a browser of a first device of the second user, while a media stream among all received media streams cannot be distributed to another display device of the second user for presentation.

US 2012/060100 describes a system and method for transferring media content in which an application may identify rendering devices in a network and/or may register with an events framework for media-related actions.

US 2004/034723 describes a converged conferencing appliance having at least one voice port and one data port for managing multi-device conferences allowing multiple participants to concurrently connect diverse devices over public switched, mobile, IP, wireless local or wide area, personal networks, and cable or fixed wireless networks.

### SUMMARY

The present invention provides a method for transferring a media stream and a user equipment, so as to implement that a browser transfers a media stream among multiple received media streams to a designated device for presentation.

A first aspect of the present invention provides a method, according to independent claim 1, for separately transferring multiple media streams tc different devices used by one user of a conference system comprising a conference system server, wherein each media stream of the multiple media streams relates to the conference and is sent to the conference system server by a different conference attendee, the method including:
acquiring, by a browser of a first device used by the user, information about at least two second devices used by that user that may each be configured to present a media stream;
indicating, by the browser of the first device, to the conference system server, that the user is a multi-device user;
receiving, by the browser of the first device, the multiple media streams from the conference system server in the form of separate media streams that have not been mixed by the conference system server;
temporarily saving, by the browser of the first device, each media stream of multiple media streams received from the conference system server;
marking, by the browser of the first device, each media stream temporarily saved by the browser of the first device, wherein the marking comprises assigning an identifier to each media stream temporarily saved by the browser of the first device; and
when it is determined that a media stream selected from the marked media streams is to be transferred to a selected one of the at least two second devices used by the user for presentation, sending, by the browser of the first device, a link of the selected media stream to the selected one of the at least two second devices, so that the selected one of the at least two second devices
acquires and plays, according to the link, the media stream corresponding to the link, where the selected one of the at least two second devices is selected according to the information about the at least two second devices.
With reference to the first aspect, in a first possible implementation manner of the first aspect, the multiple media streams are from different subpages, or are from a same page.

With reference to the first aspect, in a first possible implementation manner of the first aspect, the method further includes:
reserving, by the browser of the first device, the website page or the web application; and
when the browser of the first device receives update information, which is sent by the website page or the web application, of the selected media stream, sending, by the browser of the first device, the update information to the selected second device, so that the selected second device updates the selected media stream according to the update
information, and continues to present an updated media stream.

A second aspect of the present invention provides a user equipment, according to independent claim 4, for separately transferring multiple media streams to different devices used by one user of a conference system comprising a conference system server, wherein each media stream of the multiple media streams relates to the conference and is sent to the conference system server by a different conference attendee, the user equipment including:
a browser, configured to indicate to the conference system server that the user is a multi-device user, and to receive the multiple media streams from the conference system server in the form of separate media streams that have not been mixed by the conference system server;
an acquiring module, configured to acquire, by using the browser, information about at least two second devices that may each be configured to present a media stream;
a buffer module, configured to temporarily save, by using the browser, each media stream of the multiple media streams received by the browser from the conference system server;
a marking module, configured to mark, by using the browser, each media stream temporarily saved by the browser, wherein the marking comprises assigning an identifier to each media stream temporarily saved by the browser; and
a transferring module, configured to: when it is determined that a media stream selected from the media streams marked by the marking module is to be transferred to a selected one of the at least two second devices for presentation, send a linkof the selected media stream to the selected one of the at least two second devices by using the browser of the first device, so that the selected one of the at least two second devices acquires and plays, according to the link, the media stream corresponding to the link, where the selected one of the at least two second devices is selected according to the information, which is acquired by the acquiring module, about the at least two second devices.

With reference to the second aspect, in a possible implementation manner of the second aspect, the multiple media streams are from different subpages, or are from a same page.

With reference to the second aspect, in a first possible implementation manner of the second aspect, the user equipment further includes a reserving module, where
the reserving module is configured to reserve the website page or the web application; and
the transferring module is further configured to: when the acquiring module receives update information, which is sent by the website page or the web application, of the selected media stream, send the update information to the selected second device by using the browser of the first device, so that the selected second device updates the selected media stream according to the update information, and continues to present an updated media stream.

Further embodiments are set out in the dependent claims.

### BRIEF DESCRIPTION OF DRAWINGS

To describe the technical solutions in the embodiments of the present invention or in the prior art more clearly, the following briefly introduces the accompanying drawings required for describing exemplary implementations of the embodiments or the prior art.

Apparently, the accompanying drawings in the following description show some exemplary implementations of the embodiments of the present invention. and persons of ordinary skill in the art may still derive other drawings from these accompanying drawings without creative efforts.
FIG. 1 is a flowchart of an exemplary implementation of a method for transferring a media stream according to the present invention;
FIG. 2 is a flowchart of another exemplary implementation of a method for transferring a media stream according to the present invention;
FIG. 3 is a flowchart of still another exemplary implementation of a method for transferring a media stream according to the
FIG. 4 is a flowchart of still another exemplary implementation of a method for transferring a media stream according to the present invention;
FIG. 5 is a flowchart of still another exemplary implementation of a method for transferring a media stream according to the present invention;
FIG. 6 is a schematic diagram of an exemplary implementation of implementing real time communication between two users by using a browser according to the present invention;
FIG. 7 is a flowchart of still another exemplary implementation of a method for transferring a media stream according to the present invention;
FIG. 8 is a schematic diagram of another exemplary implementation of implementing real time communication between two users by using a browser according to the present invention;
FIG. 9 is a schematic structural diagram of an exemplary implementation of a user equipment according to the present invention;
FIG. 10 is a schematic structural diagram of another exemplary implementation of a user equipment according to the present invention;
FIG. 11 is a schematic structural diagram of still another exemplary implementation of a user equipment according to the present invention;
FIG. 12 is a schematic structural diagram of still another exemplary implementation of a user equipment according to the present invention;
FIG. 13 is a schematic structural diagram of still another exemplary implementation of a user equipment according to the present invention; and
FIG. 14 is a schematic structural diagram of still another exemplary implementation of a user equipment according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings.

The scope of the invention is only defined by the appended claims.

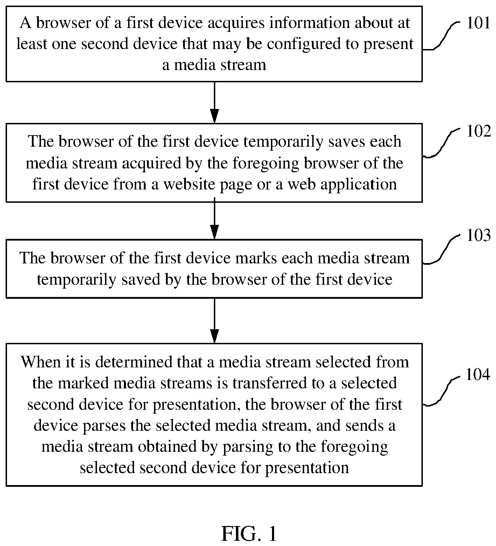

FIG. 1 is a flowchart of an embodiment of a method for transferring a media stream according to the present invention. As shown in FIG. 1, the method for transferring a media stream may include:
Step 101: A browser of a first device acquires information about at least one second device that may be configured to present a media stream.
Step 102: The browser of the first device temporarily saves each media stream acquired by the foregoing browser of the first device from a website page or a web application.
Step 103: The browser of the first device marks each media stream temporarily saved by the browser of the first device.

Specifically, that the browser of the first device marks each media stream buffered by the browser of the first device may be that: the browser of the first device assigns an identifier to each temporarily saved media stream.

Step 104: When it is determined that a media stream selected from the marked media streams is transferred to a selected second device for presentation, the browser of the first device parses the selected media stream, and sends a media stream obtained by parsing to the foregoing selected second device for presentation.

The foregoing selected second device is selected according to the information about the at least one second device.

Specifically, in step 104, that the browser of the first device parses the selected media stream may be that: the browser of the first device performs parsing processing, such as decompression and decoding, on the foregoing selected media stream, so as to parse the foregoing selected media stream into a media stream that can be directly played on the selected second device.

Specifically, in step 104, that the browser of the first device sends a media stream obtained by parsing to the foregoing selected second device for presentation may be that: the browser of the first device may send the media stream obtained by parsing to the foregoing selected second device by using a data line in a wired connection, or may also send the media stream obtained by parsing to the foregoing selected second device by using a transmission technology, such as Wireless Fidelity (Wireless Fidelity, hereinafter referred to as WiFi), the Hypertext Transfer Protocol (Hypertext Transfer Protocol, hereinafter referred to as HTTP), Universal Plug and Play (Universal Plug and Play, hereinafter referred to as UPnP), Digital Living Network Alliance (Digital Living Network Alliance, hereinafter referred to as DLNA), Bluetooth, Near Field Communication (Near Field Communication, hereinafter referred to as NFC) and/or an infrared technology.

Further, in this embodiment, the browser of the first device may further reserve the foregoing website page or the foregoing web application; and when the browser of the first device receives update information, which is sent by the foregoing website page or the foregoing web application, of the foregoing selected media stream, the browser of the first device sends the foregoing update information to the selected second device, so that the selected second device updates the foregoing selected media stream according to the foregoing update information, and continues to present an updated media stream. The browser of the first device may send the foregoing update information to the selected second device in a same manner in which the media stream obtained by parsing is sent to the foregoing selected second device, and details are not described herein again.

In this embodiment, the media stream transferred by the browser of the first device to the foregoing selected second device for presentation includes one of media streams from different subpages, or one of multiple media streams from a same page.

In the foregoing embodiment, after acquiring information about at least one second device that may be configured to present a media stream, a browser of a first device temporarily saves and marks each media stream acquired by the browser of the first device from a website page or a web application; and when it is determined that a media stream selected from the marked media streams is transferred to a selected second device for presentation, the browser of the first device parses the selected media stream, and sends a media stream obtained by parsing to the selected second device for presentation, where the foregoing selected second device is selected according to the information about the at least one second device, and therefore may implement that the browser transfers a media stream among multiple received media streams to a designated device for presentation when the browser of the first device receives multi-image media streams or starts multi-image media streams.

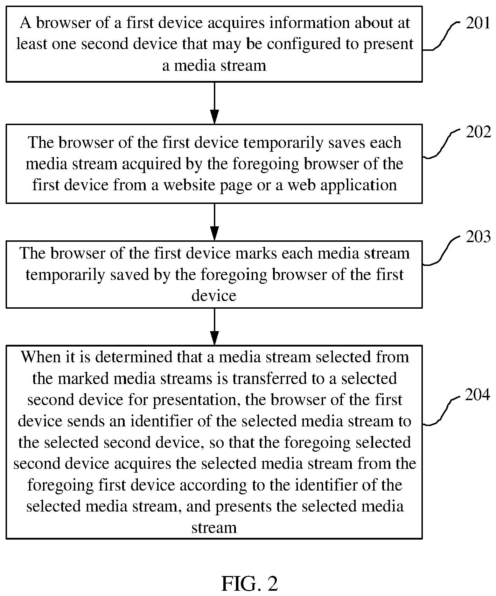

FIG. 2 is a flowchart of another embodiment of a method for transferring a media stream according to the present invention. As shown in FIG. 2, the method for transferring a media stream may include:
Step 201: A browser of a first device acquires information about at least one second device that may be configured to present a media stream.
Step 202: The browser of the first device temporarily saves each media stream acquired by the foregoing browser of the first device from a website page or a web application.
Step 203: The browser of the first device marks each media stream temporarily saved by the foregoing browser of the first device.
Step 204: When it is determined that a media stream selected from the marked media streams is transferred to a selected second device for presentation, the browser of the first device sends an identifier of the selected media stream to the selected second device, so that the foregoing selected second device acquires the selected media stream from the foregoing first device according to the identifier of the selected media stream, and presents the selected media stream.

The foregoing selected second device is selected according to the information about the at least one second device.

Specifically, in step 204, that the browser of the first device sends an identifier of the selected media stream to the selected second device may be that: the browser of the first device sends the identifier of the selected media stream to the foregoing selected second device by using a data line in a wired connection, or may also send the identifier of the selected media stream to the foregoing selected second device by using a transmission technology such as WiFi, HTTP, UPnP, DLNA, Bluetooth, NFC and/or an infrared technology.

Further, after the foregoing selected second device receives the identifier, which is sent by the browser of the first device, of the selected media stream, the second device may consider the first device as a Web server, and then the second device uses the received identifier to request, by using an HTTP request, the first device for the media stream corresponding to the identifier. The first device responds to the HTTP request, and returns the requested media stream to the second device. Certainly, the requested media stream that is returned by the first device to the second device may be a media stream that has undergone parsing processing performed by the first device, and may be directly played on the second device.

Further, the foregoing browser of the first device may further reserve the foregoing website page or the foregoing web application; and when the browser of the first device receives update information, which is sent by the foregoing website page or the foregoing web application, of the foregoing selected media stream, the browser of the first device sends the foregoing update information to the selected second device, so that the foregoing selected second device updates the foregoing selected media stream according to the foregoing update information, and continues to present an updated media stream. The browser of the first device may send the foregoing update information to the selected second device in a same manner in which the identifier of the selected media stream is sent to the selected second device, and details are not described herein again.

In this embodiment, the media stream transferred by the browser of the first device to the foregoing selected second device for presentation includes one of media streams from different subpages, or one of multiple media streams from a same page.

In the foregoing embodiment, after acquiring information about at least one second device that may be configured to present a media stream, a browser of a first device temporarily saves and marks each media stream acquired by the browser of the first device from a website page or a web application; and when it is determined that a media stream selected from the marked media streams is transferred to a selected second device for presentation, the browser of the first device sends an identifier of the selected media stream to the selected second device, so that the foregoing selected second device acquires the selected media stream from the foregoing first device according to the identifier of the selected media stream, and presents the selected media stream, where the foregoing selected second device is selected according to the information about the at least one second device, and therefore may implement that the browser transfers a media stream among multiple received media streams to a designated device for presentation when the browser of the first device receives multi-image media streams or starts multi-image media streams.

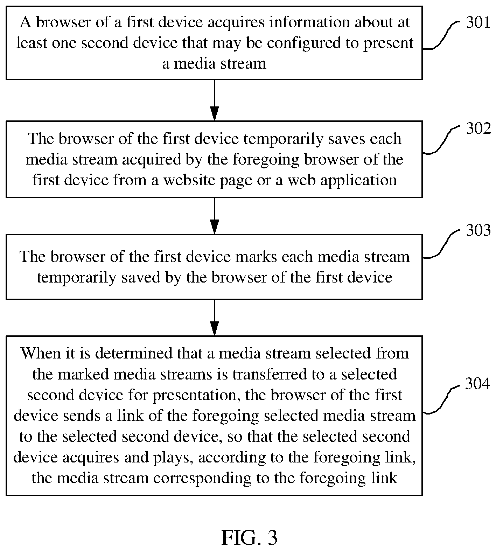

FIG. 3 is a flowchart of still another embodiment of a method for transferring a media stream according to the present invention. As shown in FIG. 3, the method for transferring a media stream may include:
Step 301: A browser of a first device acquires information about at least one second device that may be configured to present a media stream.
Step 302: The browser of the first device temporarily saves each media stream acquired by the foregoing browser of the first device from a website page or a web application.
Step 303: The browser of the first device marks each media stream temporarily saved by the browser of the first device.
Step 304: When it is determined that a media stream selected from the marked media streams is transferred to a selected second device for presentation, the browser of the first device sends a link of the foregoing selected media stream to the selected second device, so that the selected second device acquires and plays, according to the foregoing link, the media stream corresponding to the foregoing link.

The foregoing selected second device is selected according to the information about the at least one second device.

Specifically, in step 304, that the browser of the first device sends a link of the foregoing selected media stream to the selected second device may be that: the browser of the first device sends the link of the foregoing selected media stream to the foregoing selected second device by using a data line in a wired connection, or may also send the link of the foregoing selected media stream to the foregoing selected second device by using a transmission technology such as WiFi, HTTP, UPnP, DLNA, Bluetooth, NFC and/or an infrared technology.

Further, the browser of the first device may further reserve the foregoing website page or the foregoing web application; and when the browser of the first device receives update information, which is sent by the foregoing website page or the foregoing web application, of the media stream corresponding to the foregoing link, the browser of the first device sends the foregoing update information to the selected second device, so that the foregoing selected second device updates, according to the foregoing update information, the media stream corresponding to the foregoing link, and continues to present an updated media stream. The browser of the first device may send the foregoing update information to the selected second device in a same manner in which the link of the foregoing selected media stream is sent to the selected second device, and details are not described herein again.

In this embodiment, the media stream transferred by the browser of the first device to the second device for presentation includes one of media streams from different subpages, or one of multiple media streams from a same page.

In the foregoing embodiment, after acquiring information about at least one second device that may be configured to present a media stream, a browser of a first device temporarily saves and marks each media stream acquired by the browser of the first device from a website page or a web application; and when it is determined that a media stream selected from the marked media streams is transferred to a selected second device for presentation, the browser of the first device sends a link of the selected media stream to the selected second device, so that the selected second device acquires and plays, according to the foregoing link, the media stream corresponding to the foregoing link, where the foregoing selected second device is selected according to the information about the at least one second device, and therefore may implement that the browser transfers a media stream among multiple received media streams to a designated device for presentation when the browser of the first device receives multi-image media streams or starts multi-image media streams.

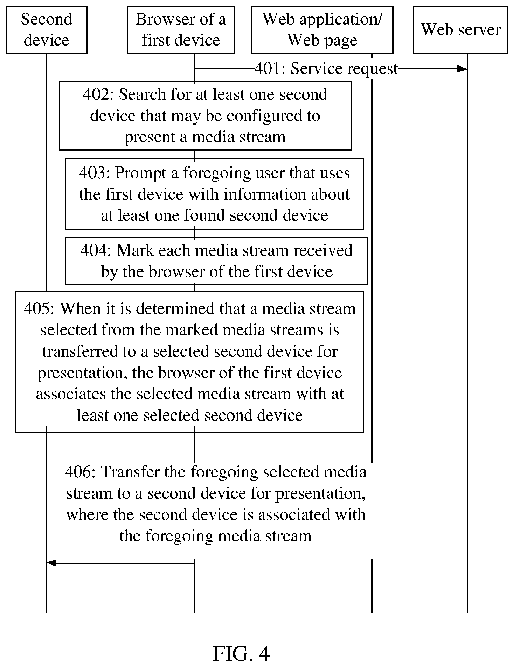

FIG. 4 is a flowchart of still another embodiment of a method for transferring a media stream according to the present invention. In this embodiment, when performing a multimedia service by using a browser of a first device, a user that uses the first device may transfer a media stream acquired in the browser of the first device to a second device for presentation, where the second device is discovered by the browser of the first device. This embodiment may implement presenting, by using the browser, different media streams, which are in different subpages or in a same page, on different devices, so as to bring better user experience.

As shown in FIG. 4, the method for transferring a media stream may include:
Step 401: A user that uses a first device opens a web page to be browsed or a Web-based application by using a browser of the first device, and the browser of the first device sends a service request to a corresponding Web server.

For example, the user that uses the first device opens an online video website or an online video Web application by using the browser of the first device, and after a media stream negotiation process is performed, a media stream may be loaded to the browser of the first device, so that the browser of the first device is ready to present the media stream or presents the media stream.

Step 402: The browser of the first device searches for at least one second device that may be configured to present a media stream.

Specifically, the browser of the first device may search for the at least one second device by using a frequently used device registration and/or device discovery protocol such as Wireless Fidelity (Wireless Fidelity, hereinafter referred to as WiFi), the Hypertext Transfer Protocol (Hypertext Transfer Protocol, hereinafter referred to as HTTP), Universal Plug and Play (Universal Plug and Play, hereinafter referred to as UPnP), Digital Living Network Alliance (Digital Living Network Alliance, hereinafter referred to as DLNA), Bluetooth, Near Field Communication (Near Field Communication, hereinafter referred to as NFC), and an infrared technology, where the at least one second device may be configured to present a media stream.

Optionally, the at least one second device may be one or more devices that may be accessed by the user that uses the first device. For example, the second device may be at least one device, except the first device, in a home area network of the user that uses the first device, or may be at least one device that the user that uses the first device has permission to use.

Step 403: The browser of the first device prompts the foregoing user that uses the first device with information about at least one found second device.

Specifically, the browser of the first device may prompt the foregoing user that uses the first device with the foregoing information about the at least one second device by using a Web page or a Web application; or the browser of the first device may also directly prompt the foregoing user that uses the first device with the foregoing information about the at least one second device.

The foregoing information about the at least one second device may include a device identifier of the second device and/or capability information of the second device. Specifically, the capability information of the second device may include information such as a device type of the second device and/or a service capability of the second device. For example, the capability information of the second device may be that the second device is a device capable of playing audio, a device capable of playing a video, a data sharing device, or the like.

Step 404: The browser of the first device marks each media stream received by the browser of the first device.

Specifically, when the browser of the first device determines that media streams received by the browser of the first device include at least two media streams, and the browser of the first device has obtained the information about the at least one second device, the browser of the first device parses out each media stream from the media streams, temporarily saves the media streams received by the browser of the first device, and assigns an identifier to each temporarily saved media stream. For example, when the media streams received by the first device are multiple media streams collected from different microphones and/or cameras of a same device of a same user, the browser of the first device parses out each media stream from the received media streams, and temporarily saves each media stream and assigns an identifier to each temporarily saved media stream; and when the media streams received by the first device are media streams collected from different devices of multiple users and are mixed by a server and then sent to the first device, the browser of the first device parses out different media streams, temporarily saves the received media streams, and assigns identifiers to the temporarily saved media streams.

In addition, the browser of the first device may further present the marked media streams to the user that uses the first device for processing and selection.

Step 405: When it is determined that a media stream selected from the marked media streams is transferred to a selected second device for presentation, the browser of the first device associates the selected media stream with at least one selected second device.

The foregoing at least one selected second device is selected by the user that uses the first device from the foregoing at least one second device according to the information, which is prompted by the browser of the first device, about the at least one second device.

Specifically, when it is determined that the media stream selected from the marked media streams is transferred to the selected second device for presentation, the browser of the first device associates the selected media stream with at least one selected second device. It should be noted that, the association means that a relationship is established between the selected media stream and the at least one selected second device. For example, the selected media stream and the at least one selected second device are displayed on a screen of the first device, and it is determined, by continually clicking an identifier of the selected media stream and an identifier of the at least one selected second device, that the selected media stream is transferred to the at least one selected second device for presentation. Certainly, the identifier of the selected media stream may also be dragged to the identifier of the at least one selected second device, so as to determine that the selected media stream is transferred to the at least one selected second device for presentation.

A step of selecting a second device for the selected media stream may be selecting different second devices to present different media streams. For example, at least one second device is correspondingly selected for at least one media stream in a page or a Web application to present the at least one media stream. During specific implementation, a specific second device may be designated for the selected media stream. For example, it may be designated that a media stream of a video call is presented on a mobile phone, and that a video media stream that is related to a TV show is presented on a television set.

Step 406: The browser of the first device transfers the foregoing selected media stream to a second device for presentation, where the second device is associated with the foregoing media stream.

Optionally, in this embodiment, step 402 and step 403 may be executed before step 401.

Certainly, in this embodiment, the user that uses the first device may also set devices corresponding to media streams in advance, and after receiving a media stream, the browser of the first device directly sends, according to presetting of the user, the media stream to a corresponding device for presentation.

Further, after step 406, when the user that uses the first device needs to perform an operation on the media stream, for example, performing an operation such as pausing, resuming play, fast forwarding, rewinding, zooming in, zooming out, and/or screen capturing on the media stream, the user may perform the operation on the browser of the first device, and the browser of the first device performs processing on the media stream according to the operation of the user, and then continues to present a processed media stream on the second device. For example, when the user that uses the first device performs fast forwarding, the browser of the first device temporarily saves the media stream according to a fast-forward operation, and synchronously updates a new temporarily saved media stream to a corresponding second device for presentation, so as to implement that an operation on content presented on multiple devices may be performed on a browser of one device.

The foregoing embodiment may implement transferring a media stream obtained from a subpage or a sub tab page in a browser to a different device for presentation, so that a user may perform another operation on the browser, thereby implementing that the browser transfers a media stream among multiple received media streams to a designated device for presentation.

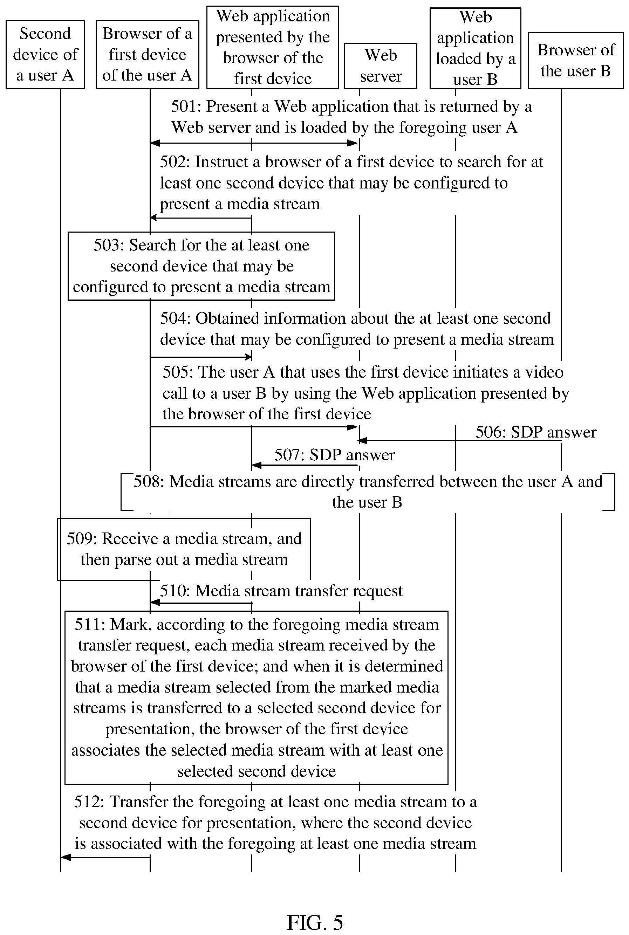

FIG. 5 is a flowchart of still another embodiment of a method for transferring a media stream according to the present invention. This embodiment mainly implements that in a Web application, media streams are distributed, by using a browser, to different devices for separate presentation. The Web application is a manner in which some small applications such as an audio/video call and a game are implemented by using the browser, where a user equipment does not need to locally install a client, and a page presented to a user is directly parsed and rendered by using the browser. In the Web application, the browser may parse out the media streams, and learn types of the media streams and the number of the media streams. After acquiring a device that may be configured to present a media stream, the browser transfers, according to a requirement of the user and according to an instruction of the user, the media streams to specific devices for presentation, so as to bring better user experience. In this embodiment, the media streams transferred by the browser may be at least two media streams from different Web applications, or may also be at least two media streams in a same Web application.

The method provided by this embodiment is described below by using a Web-based real time communication (WebRTC) service as an example. This embodiment may implement that: in the WebRTC service, a browser parses received media streams, determines the number of video media streams, and when there are at least two video media streams, prompts a user that one media stream may be transferred to another device for presentation; or in a case in which there is only one video and one channel of audio, when detecting that there is an available video presenting device, the browser prompts the user that the video may be presented on the video presenting device, and that the audio is reserved on an original device for presentation; and finally, the browser obtains different media streams by splitting, and transfers a selected media stream to a specific device for presentation, and therefore may implement that the browser performs an operation on the received media streams, and distributes the media streams to different devices for presentation.

As shown in FIG. 5, the method for transferring a media stream may include:
501: A user A that uses a first device loads a Web application of a service expected to be performed, such as a Web-based video application, onto the first device. In this case, a browser of the first device presents the Web application, which is returned by a Web server and is loaded by the foregoing user A, to the foregoing user A, and the user A may perform a corresponding service by using the Web application presented by the browser of the first device.
Step 502: The Web application presented by the browser of the first device instructs the browser of the first device to search for at least one second device that may be configured to present a media stream.

Specifically, when developing the foregoing Web application, a developer may write, in a manner of code, an instruction of searching for the foregoing second device into the Web application. When the user A that uses the first device requests for loading the Web application, the code is executed by means of triggering of the user A or is automatically executed by the foregoing Web application, to instruct the browser of the first device to search for information about the at least one second device that may be configured to present a media stream.

Step 503: The browser of the first device sends a search request message to search for the at least one second device that may be configured to present a media stream.

Specifically, the browser of the first device may search, by using a frequently used device registration and/or device discovery protocol such as WiFi, HTTP, UPnP, DLNA, Bluetooth, NFC, and an infrared technology, for the at least one second device that may be configured to present a media stream.

Optionally, the search request message sent by the browser of the first device may be used to request service information, a service type and/or capability information, and the like of the second device. For example, by using "urn: schemas-services: audio/video/data", the browser of the first device may request for audio, video, or data service capability supported by the second device and/or request for a media format supported by the second device; or the browser of the first device may request for an identifier of the second device, capability information supported by the second device, or a type of the second device by using "uuid/capability/type".

Optionally, the browser of the first device may assign an identifier to each second device according to information about at least one found second device; or the browser of the first device may identify different second devices by using different uniform resource locators (Uniform Resource Locator, hereinafter referred to as URL).

Step 504: The browser of the first device feeds back, to the Web application presented by the browser of the first device, the obtained information that is about the at least one second device that may be configured to present a media stream, so that the user A that uses the first device can perform selection.

Step 505: The user A that uses the first device initiates a video call to a user B by using the Web application presented by the browser of the first device.

The user A is a user that has multiple devices. Because a video call is initiated, the Web application presented by the browser of the first device interacts with the browser of the first device, initiates signaling negotiation, and determines media stream information of the video call initiated by the user A, where the media stream information includes Session Description Protocol Offer (Session Description Protocol, SDP Offer) information such as a media stream type, port number information, and a media stream format.

Step 506: It is assumed that the user B also starts a Web application, the Web application started by the user B completes signaling negotiation after receiving the call initiated by the user A, generates an SDP answer (SDP Answer) according to the received SDP Offer information, and returns the SDP answer to the Web server.

Step 507: The Web server sends the received SDP answer to the Web application presented by the browser of the first device.

Step 508: Media streams are directly transferred between the device of the user A and a device of the user B.

Step 509: After receiving the media streams, the browser of the first device parses out media streams, and presents obtained media streams to the user A.

Optionally, the browser of the first device may determine, according to types of media streams obtained by parsing and the obtained information about the at least one second device, whether the media streams can be transferred, and prompt the user A. For example, it is assumed that the media streams received by the browser of the first device include two video media streams, and that the user A further has at least one second device in addition to the first device, the browser of the first device may prompt the user A that one or both of the two received video media streams may be transferred to the second device for presentation, and the browser of the first device may further prompt the user A with the information about the foregoing at least one second device.

Optionally, after receiving the media streams and before presenting the media streams to the user A, the browser of the first device may determine, according to the received media streams and the obtained information about the at least one second device, whether there is a media stream that can be transferred; and if there is a media stream that can be transferred, the browser of the first device may mark the foregoing media streams and then present the marked media streams to the user A, so that the user A directly selects a media stream that needs to be transferred to the second device for presentation. For example, after receiving the two video media streams, the browser of the first device may split the foregoing two video media streams, separately mark the foregoing two video media streams, and present the marked video media streams to the user A, so that the user A selects a media stream and further performs an operation on the selected media stream.

Step 510: The user A sends a media stream transfer request to the browser of the first device by using the Web application presented by the browser of the first device.

Optionally, if the media streams have been marked, the foregoing media stream transfer request may carry a media stream that is selected by the user A according to the information prompted by the browser of the first device and needs to be transferred to the second device for presentation, and carry information about a second device that is selected by the user A for the foregoing selected media stream.

Step 511: The browser of the first device marks, according to the foregoing media stream transfer request, each media stream received by the browser of the first device; and when it is determined that a media stream selected from the marked media streams is transferred to a selected second device for presentation, the browser of the first device associates the selected media stream with at least one selected second device.

It should be noted that, the association means that a relationship is established between the selected media stream and the at least one selected second device. For example, the selected media stream and the at least one selected second device are displayed on a screen of the first device, and it is determined, by continually clicking an identifier of the selected media stream and an identifier of the at least one selected second device, that the selected media stream is transferred to the at least one selected second device for presentation. Certainly, the identifier of the selected media stream may also be dragged to the identifier of the at least one selected second device, so as to determine that the selected media stream is transferred to the at least one selected second device for presentation.

Optionally, when receiving the media streams, the browser of the first device may not mark the media streams, and after receiving the media stream transfer request, the browser of the first device splits and marks the received media streams.

Specifically, that the browser of the first device marks each media stream received by the browser of the first device may be that: after receiving the media stream transfer request sent by the user A, the browser of the first device temporarily saves each media stream received by the browser of the first device, and assigns an identifier to each media stream temporarily saved by the browser of the first device. For example, the browser of the first device assigns a URL to each temporarily saved media stream.

During specific implementation, the browser of the first device may invoke an interface for media stream identifier assignment, such as createObjectURL(), so that the browser of the first device creates a temporarily saved media stream object, and assigns an identifier such as a URL to each temporarily saved media stream. Further, the browser of the first device may also provide the media stream with attribute information, such as a media stream code format, required bandwidth and/or initiator information, for use when an operation is subsequently performed on the media stream.

The foregoing at least one selected second device is selected by the user A from the foregoing at least one second device according to the information, which is obtained by the browser of the first device, about the at least one second device.

Specifically, the browser of the first device may associate at least one media stream, which is selected by the user A and needs to be transferred to the second device for presentation, with at least one second device that is selected by the user A for the foregoing selected media stream.

Step 512: The browser of the first device transfers the foregoing at least one media stream to a second device for presentation, where the second device is associated with the foregoing at least one media stream.

Specifically, the foregoing media streams may be transferred by using a frequently used device communication protocol.

The foregoing browser of the first device may separately parse the foregoing at least one media stream, and send at least one media stream obtained by parsing to the second device for presentation, where the second device is associated with the foregoing at least one media stream; or the browser of the first device may also send an identifier (such as a URL) of the foregoing at least one media stream to the second device associated with the foregoing at least one media stream, so that the second device associated with the foregoing at least one media stream acquires, according to the foregoing identifier, the media stream selected by the user A from the browser of the first device, and presents the media stream.

For example, during specific implementation, by invoking the following interface, the browser of the first device may acquire a media stream and further transfer the media stream to a specific second device.

```
    Navigator OutputUserMedia {
    void OutputUserMedia (constraints, successCallback, errorCallback);
    };
```

where "constraints" includes one or a combination of the following parameters: parameters such as an audio attribute, a video attribute, an assigned media stream identifier, and an identifier of the second device that receives the forwarded media stream, where the attributes are temporarily saved and need to be forwarded.

The following is an example of implementing, by using the following interface, acquiring a video media stream with an identifier of stream1 and creating a URL for the media stream:

```
    navigator. getUserMedia({video:true}, gotStream);
    var video = document. getElementById(' stream1');
    video, src = URL. createObjectURL(stream1);
```

In addition, in this embodiment, when there are multiple media streams, the browser of the first device may add, by invoking an add() interface, a new media stream to a media stream list from which the user A selects to transfer to a different second device. When the user A expects to play a media stream on a specific second device, the browser of the first device may by invoking a remove() interface, delete the media stream from the media stream list and provide a media stream parameter. In this case, the browser of the first device deletes the media stream that is received by the browser of the first device and has been transferred to the second device for presentation.

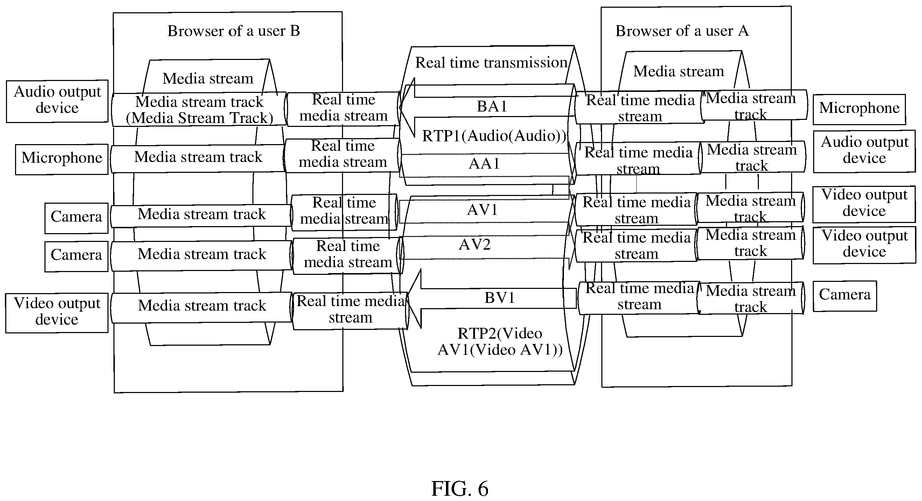

FIG. 6 is a schematic diagram of an embodiment of implementing real time communication between two users by using a browser according to the present invention. As shown in FIG. 6, a user A and a user B perform audio video real time communication. After media negotiation, media streams are directly transmitted between two browsers by using the Real-time Transport Protocol (Real-time Transport Protocol, hereinafter referred to as RTP). The user B has two cameras and a microphone that are used as input devices, and also has an audio output device and a video output device. In a device discovery process, the user A discovers that there is an audio output device, two video output devices, a camera, and a microphone. The user A and the user B establish two RTP sessions by using a peer connection (PeerConnection) method, where the two RTP sessions are separately transmitted on different User Datagram Protocol (User Data Protocol, hereinafter referred to as UDP) ports, and one media type is transmitted on each RTP session. In this example, an audio media stream that is bidirectionally transmitted between a browser of the user A and a browser of the user B is transmitted during an RTP1 session, and video media streams that are bidirectionally transmitted between the browser of the user A and the browser of the user B are transmitted during an RTP2 session, where the video media streams include two video media streams sent by the user B to the user A and one video media stream sent by the user A to the user B. The browser of the user A parses out the two received video media streams sent by the user B, temporarily saves the media streams, assigns URLs, and separately provides the two video media streams to the two video output devices for presentation.

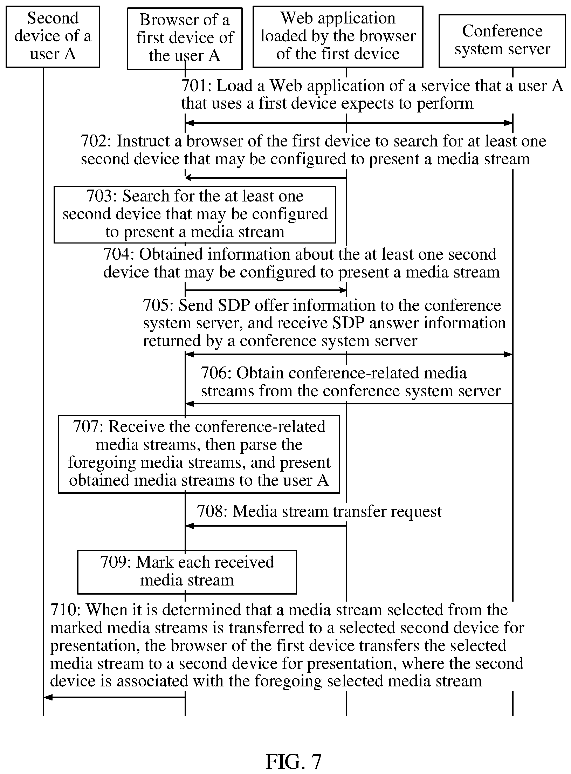

FIG. 7 is a flowchart of still another embodiment of a method for transferring a media stream according to the present invention. In a conference system, when a user A has multiple devices, the user A may transfer videos of multiple attendees to different devices for presentation. A browser of the user A needs to indicate, to a conference system server, that the user A is a multi-device user. In this way, the conference system server does not mix videos sent to the user A, other attendees carry their own identifiers in media streams, and the conference system server marks information about the attendees in the media streams sent to the foregoing user A, so that the browser on a conference terminal of the user A distributes a selected video media stream to a specific device for presentation, where the selected video media stream is sent by an attendee. This embodiment may be implemented to avoid a problem of relatively small images when videos of multiple attendees are presented on a browser of one display device of a user in a multi-image manner, so as to improve user experience in a conference system.

As shown in FIG. 7, the method for transferring a media stream may include:
701: A browser of a first device loads a Web application of a service that a user A that uses the first device expects to perform.

In this embodiment, the Web application loaded by the first device is a Web application of a video conference system. In this case, the browser of the first device presents, to the foregoing user A, the Web application that is returned by the video conference system, and the user A that uses the first device may perform a corresponding service by using a page presented by the browser of the first device.

Specifically, the user A that uses the first device may enter a main page of the video conference system to load a page of the Web application, or may also directly load a page of a specific conference by using a given specific identifier of the specific conference.

Step 702: The Web application loaded by the browser of the first device instructs the browser of the first device to search for at least one second device that may be configured to present a media stream.

Specifically, when developing the foregoing Web application, a developer may write, in a manner of code, an instruction of searching for the foregoing second device into the Web application. When the user A that uses the first device requests for loading the Web application, the code is executed by means of triggering of the user A or is automatically executed by the foregoing Web application, to instruct the browser of the first device to search for information about the at least one second device that may be configured to present a media stream.

Step 703: The browser of the first device sends a search request message to search for the at least one second device that may be configured to present a media stream.

Specifically, the browser of the first device may search, by using a frequently used device registration and/or device discovery protocol such as WiFi, HTTP, UPnP, DLNA, Bluetooth, NFC, and an infrared technology, for the at least one second device that may be configured to present a media stream.

Optionally, the search request message sent by the browser of the first device may be used to request service information, a service type and/or capability information, and the like of the second device. For example, by using "urn: schemas-services: audio/video/data", the browser of the first device may request for audio, video, or data service capability supported by the second device and/or request for a media format supported by the second device; or the browser of the first device may request for an identifier of the second device, capability information supported by the second device, or a type of the second device by using "uuid/capability/type".

Optionally, the browser of the first device may assign an identifier to each second device according to information about at least one found second device; or the browser of the first device may identify different second devices by using different URLs.

Step 704: The browser of the first device feeds back, to the Web application loaded by the browser of the first device, the obtained information that is about the at least one second device that may be configured to present a media stream, so that the user A that uses the first device can perform selection.

Step 705: The browser of the first device sends SDP Offer (SDP Offer) information to a conference system server by using the Web application loaded by the browser of the first device, and receives SDP answer (SDP Answer) information returned by the conference system server.

The SDP Offer information carries indication information indicating that the user A that uses the first device is a multi-device user, and the indication information is used to indicate, to the conference system server, that the foregoing user A expects to distribute media streams to different presenting devices for presentation. In this way, the conference system server does not mix the media streams sent to the user that uses the first device.

Step 706: The browser of the first device obtains conference-related media streams from the conference system server.

The foregoing media streams may include multimedia information, such as audio, a video, and data. The media streams may carry information about generators of the media streams, such as an identifier of a generator of a media stream such as a front camera video of a user B and/or a video of a user C, so that the browser of the first device forwards a corresponding media stream to a selected device according to the identifier.

Step 707: After receiving the conference-related media streams, the browser of the first device parses the foregoing media streams, and presents obtained media streams to the user A.

Subsequently, the browser of the first device determines, according to types of media streams obtained by parsing and the obtained information about the at least one second device, whether the media streams can be transferred, and prompt the user A. For example, it is assumed that the media streams received by the browser of the first device include two video media streams, and that the user A further has at least one second device in addition to the first device, the browser of the first device may prompt the user A that one or both of the two received video media streams may be transferred to the second device for presentation, and the browser of the first device may further prompt the user A with information about the foregoing at least one second device.

Step 708: The user A sends a media stream transfer request to the browser of the first device by using the Web application loaded by the browser of the first device.

Specifically, the user Aselects, according to the number of attendees and the number of second devices that may be configured to present media streams, to transfer the media streams. The user A may select to present, on the browser of the first device, all media streams sent by the conference server, replicate a part of the media streams, and send the replicated media streams to other devices for presentation.

Optionally, if the media streams have been marked, the foregoing media stream transfer request may carry a media stream that is selected by the user A according to the information prompted by the browser of the first device and needs to be transferred to the second device for presentation, and carry information about a second device that is selected by the user A for the foregoing selected media stream.

The user A designates a specific media stream and sends the specific media stream to a selected second device, and the browser of the first device associates the media stream designated by the user A with the second device selected by the user A for the designated media stream. For example, in addition to the first device, the user A further has three second devices, then the user A may separately transfer, to the three second devices for separate presentation, attendee videos that are sent by the conference system server and corresponding to marked media streams.

Step 709: The browser of the first device marks each received media stream according to a request of the user A.

Specifically, after receiving the media stream transfer request sent by the user A, the browser of the first device temporarily saves each media stream received by the browser of the first device, and assigns an identifier to each media stream temporarily saved by the browser of the first device. For example, the browser of the first device assigns a URL to each temporarily saved media stream.

When the number of the attendees is greater than the number of the second devices that may be configured to present media streams, the browser of the first device may present videos of all attendees, and temporarily save a media stream that is expected to be transferred to the second device for presentation, and/or replicate the media stream onto the second device for presentation.

Step 710: When it is determined that a media stream selected from the marked media streams is transferred to a selected second device for presentation, the browser of the first device transfers the selected media stream to a second device for presentation, where the second device is associated with the foregoing selected media stream.

Specifically, the foregoing media streams may be transferred by using a frequently used device communication protocol.

The foregoing browser of the first device parses the selected media stream, and sends a media stream obtained by parsing to the second device for presentation, where the second device is associated with the foregoing selected media stream; the browser of the first device sends an identifier (such as a URL) of the foregoing selected media stream to the second device associated with the foregoing selected media stream, so that the second device associated with the foregoing selected media stream acquires, according to the foregoing identifier from the browser of the first device, the media stream selected by the user A, and presents the media stream.

In this embodiment, in addition to audio video media streams, the browser of the first device may further transfer, according to service type information of the second device found by the browser of the first device, received data sharing content to a device with a data sharing service, such as a projector.

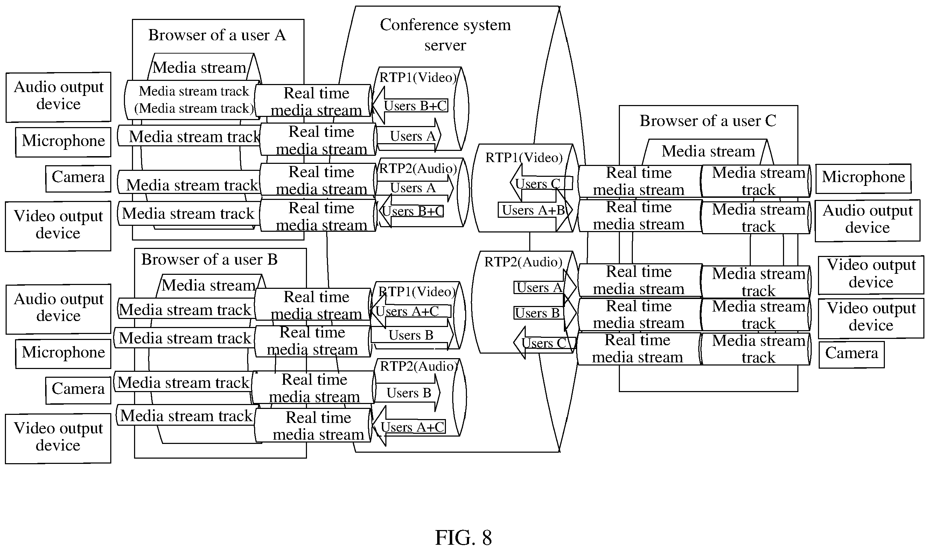

FIG. 8 is a schematic diagram of another embodiment of implementing real time communication between two users by using a browser according to the present invention. As shown in FIG. 8, three users, namely, a user A, a user B, and a user C, are connected to a conference system. The user C has two video display devices. Therefore, when sending media streams received from the user A and the user B to the user C, a conference server sends the media streams to the user C by dividing the media streams into two media streams rather than mixing the media streams, and indicates identifiers of the user A and the user B in the two media streams, so that the user C may distinguish the two media streams and select to display the media streams on different video display devices.

By using the method provided by the present invention, a browser on a user terminal may operate a received media stream according to an instruction of a Web application, and transfer the received media stream to a designated device for presentation. A user may select a device found by the browser, and present a designated media stream on the selected device. Especially when multiple subpages are opened in the browser, media streams on different subpages may be transferred to different devices for presentation. In a conference system, the browser may separately transfer multiple media streams received from a Web application page to different presenting devices for presentation, so that the user may watch different attendees on larger and independent screens.

Persons of ordinary skill in the art may understand that all or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium includes any medium that can store program code, such as a ROM, a RAM, a magnetic disk, or an optical disc.

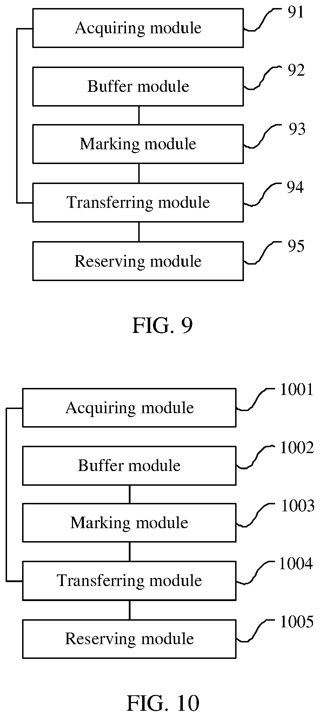

FIG. 9 is a schematic structural diagram of an embodiment of a user equipment according to the present invention. The user equipment in this embodiment may be a first device for implementing a process of the embodiment shown in FIG. 1 of the present invention. As shown in FIG. 9, the user equipment may include an acquiring module 91, a buffer module 92, a marking module 93, and a transferring module 94.

The acquiring module 91 is configured to acquire, by using a browser of a first device, information about at least one second device that may be configured to present a media stream.

The buffer module 92 is configured to temporarily save, by using the browser of the first device, each media stream acquired by the foregoing browser of the first device from a website page or a web application.

The marking module 93 is configured to identify each media stream temporarily saved by the buffer module 92. Specifically, that the marking module 93 marks each media stream temporarily saved by the buffer module 92 may be that: the marking module 93 assigns an identifier to each temporarily saved media stream.

The transferring module 94 is configured to: when it is determined that a media stream selected from the media streams marked by the marking module 93 is transferred to a selected second device for presentation, parse the selected media stream by using the foregoing browser of the first device, and send a media stream obtained by parsing to the foregoing selected second device for presentation. The foregoing selected second device is selected according to the information, which is acquired by the acquiring module 91, about the at least one second device.

Specifically, that the transferring module 94 parses the selected media stream by using the foregoing browser of the first device may be that: the transferring module 94 performs parsing processing, such as decompression and decoding, on the foregoing selected media stream by using the foregoing browser of the first device, so as to parse the foregoing selected media stream into a media stream that can be directly played on the selected second device.

Specifically, that the transferring module 94 sends a media stream obtained by parsing to the foregoing selected second device for presentation may be that: the transferring module 94 may send the media stream obtained by parsing to the foregoing selected second device by using a data line in a wired connection, or may also send the media stream obtained by parsing to the foregoing selected second device by using a transmission technology such as WiFi, HTTP, UPnP, DLNA, Bluetooth, NFC and/or an infrared technology.

Further, in an implementation manner of this embodiment, the foregoing user equipment may further include a reserving module 95.

The reserving module 95 is configured to reserve the foregoing website page or the foregoing web application.

The transferring module 94 is further configured to: when the acquiring module 91 receives update information, which is sent by the foregoing website page or the foregoing web application, of the selected media stream, send the foregoing update information to the selected second device by using the browser of the first device, so that the foregoing selected second device updates the selected media stream according to the foregoing update information, and continues to present an updated media stream. The transferring module 94 may send the foregoing update information to the selected second device in a same manner in which the media stream obtained by parsing is sent to the foregoing selected second device, and details are not described herein again.

In this embodiment, the media stream transferred by the transferring module 94 to the foregoing selected second device for presentation includes one of media streams from different subpages, or one of multiple media streams from a same page.

In this embodiment, the user equipment may be a device that may use a browser to browse a web page and/or implement a web application, such as a mobile phone, a personal computer (Personal Computer, hereinafter referred to as PC), a tablet computer, a television and/or a set top box, a vehicle-mounted device, and a screen terminal.

The user equipment provided in the foregoing embodiment may implement that a browser transfers a media stream among multiple received media streams to a designated device for presentation.

FIG. 10 is a schematic structural diagram of another embodiment of a user equipment according to the present invention. The user equipment in this embodiment may be a first device for implementing a process of the embodiment shown in FIG. 2 of the present invention. As shown in FIG. 10, the user equipment may include an acquiring module 1001, a buffer module 1002, a marking module 1003, and a transferring module 1004.

The acquiring module 1001 is configured to acquire, by using a browser of a first device, information about at least one second device that may be configured to present a media stream.

The buffer module 1002 is configured to temporarily save, by using the browser of the first device, each media stream acquired by the browser of the first device from a website page or a web application.

The marking module 1003 is configured to identify each media stream temporarily saved by the buffer module 1002.

The transferring module 1004 is configured to: when it is determined that a media stream selected from the media streams marked by the marking module 1003 is transferred to a selected second device for presentation, send an identifier of the foregoing selected media stream to the foregoing selected second device by using the browser of the first device, so that the foregoing selected second device acquires the foregoing selected media stream from the first device according to the identifier of the selected media stream, and presents the selected media stream.

The foregoing selected second device is selected according to the information about the at least one second device.

Specifically, that the transferring module 1004 sends an identifier of the foregoing selected media stream to the foregoing selected second device by using the browser of the first device may be that: the transferring module 1004 sends the identifier of the selected media stream to the foregoing selected second device by using a data line in a wired connection, or may also send the identifier of the selected media stream to the foregoing selected second device by using a transmission technology such as WiFi, HTTP, UPnP, DLNA, Bluetooth, NFC and/or an infrared technology.

Further, after the foregoing selected second device receives the identifier, which is sent by the browser of the first device, of the selected media stream, the second device may consider the first device as a Web server, then the second device uses the received identifier to request, by using an HTTP request, the first device for the media stream corresponding to the identifier, and finally, the first device responds to the HTTP request, and returns the requested media stream to the second device. Certainly, the requested media stream that is returned by the first device to the second device may be a media stream that has undergone parsing processing performed by the first device, and may be directly played on the second device.

Further, in an implementation manner of this embodiment, the foregoing user equipment may further include a reserving module 1005.

The reserving module 1005 is configured to reserve the foregoing website page or the foregoing web application.

The transferring module 1004 is further configured to: when the acquiring module 1001 receives update information, which is sent by the foregoing website page or the foregoing web application, of the selected media stream, send the foregoing update information to the foregoing selected second device by using the browser of the first device, so that the foregoing selected second device updates the foregoing selected media stream according to the foregoing update information, and continues to present an updated media stream. The transferring module 1004 may send, by using the browser of the first device, the foregoing update information to the selected second device in a same manner in which the identifier of the selected media stream is sent to the selected second device, and details are not described herein again.

In this embodiment, the media stream transferred by the transferring module 1004 to the foregoing selected second device for presentation includes one of media streams from different subpages, or one of multiple media streams from a same page.

In this embodiment, the user equipment may be a device that may use a browser to browse a web page and/or implement a web application, such as a mobile phone, a PC, a tablet computer, a television and/or a set top box, a vehicle-mounted device, and a screen terminal.

The user equipment provided in the foregoing embodiment may implement that a browser transfers a media stream among multiple received media streams to a designated device for presentation.

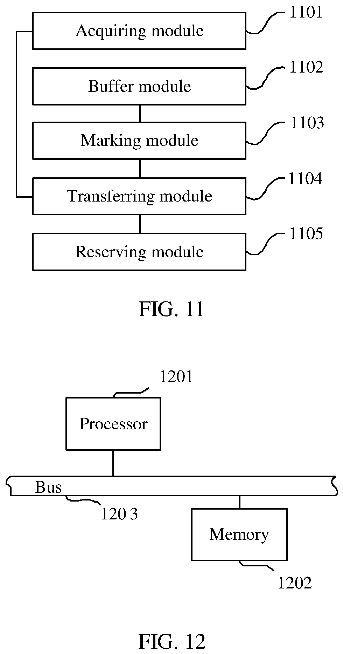

FIG. 11 is a schematic structural diagram of still another embodiment of a user equipment according to the present invention. The user equipment in this embodiment may be a first device for implementing a process of the embodiment shown in FIG. 3 of the present invention. As shown in FIG. 11, the user equipment may include an acquiring module 1101, a buffer module 1102, a marking module 1103, and a transferring module 1104.

The acquiring module 1101 is configured to acquire, by using a browser of a first device, information about at least one second device that may be configured to present a media stream.

The buffer module 1102 is configured to temporarily save, by using the browser of the first device, each media stream acquired by the browser of the first device from a website page or a web application.

The marking module 1103 is configured to identify each media stream temporarily saved by the buffer module 1102.

The transferring module 1104 is configured to: when it is determined that a media stream selected from the media streams marked by the marking module 1103 is transferred to a selected second device for presentation, send a link of the foregoing selected media stream to the selected second device by using the browser of the first device, so that the selected second device acquires and plays, according to the foregoing link, the media stream corresponding to the foregoing link. The foregoing selected second device is selected according to the information about the at least one second device.

Specifically, that the transferring module 1104 sends a link of the foregoing selected media stream to the selected second device by using the browser of the first device may be that: the transferring module 1104 sends the link of the foregoing selected media stream to the foregoing selected second device by using a data line in a wired connection, or may also send the link of the foregoing selected media stream to the foregoing selected second device by using a transmission technology such as WiFi, HTTP, UPnP, DLNA, Bluetooth, NFC and/or an infrared technology.

Further, in an implementation manner of this embodiment, the foregoing user equipment may further include a reserving module 1105.

The reserving module 1105 is configured to reserve the foregoing website page or the foregoing web application.

The transferring module 1104 is further configured to: when the acquiring module 1101 receives update information, which is sent by the foregoing website page or the foregoing web application, of the media stream corresponding to the foregoing link, send the foregoing update information to the foregoing selected second device by using the browser of the first device, so that the foregoing selected second device updates, according to the foregoing update information, the media stream corresponding to the foregoing link, and continues to present an updated media stream. The transferring module 1104 may send, by using the browser of the first device, the foregoing update information to the selected second device in a same manner in which the link of the foregoing selected media stream is sent to the selected second device, and details are not described herein again.

In this embodiment, the media stream transferred by the transferring module 1104 to the second device for presentation includes one of media streams from different subpages, or one of multiple media streams from a same page.

In this embodiment, the user equipment may be a device that may use a browser to browse a web page and/or implement a web application, such as a mobile phone, a PC, a tablet computer, a television and/or a set top box, a vehicle-mounted device, and a screenterminal.

The user equipment provided in the foregoing embodiment may implement that a browser transfers a media stream among multiple received media streams to a designated device for presentation.

FIG. 12 is a schematic structural diagram of still another embodiment of a user equipment according to the present invention. The user equipment in this embodiment may be a first device for implementing a process of the embodiment shown in FIG. 1 of the present invention. As shown in FIG. 12, the user equipment may include a processor 1201, a memory 1202, and a bus 1203, where the processor 1201 and the memory 1202 communicate with each other by using the bus 1203; the memory 1202 is configured to store a program; and the processor 1201 is configured to execute the program stored in the memory 1202. When the program is executed, the following operations are included:
acquiring, by using a browser of the first device, information about at least one second device that may be configured to present a media stream;
temporarily saving, by using the browser of the first device, each media stream acquired by the foregoing browser of the first device from a website page or a web application;
marking each media stream temporarily saved by the browser of the first device; and
when it is determined that a media stream selected from the marked media streams is transferred to a selected second device for presentation, parsing the selected media stream by using the browser of the first device, and sending a media stream obtained by parsing to the foregoing selected second device for presentation.

The foregoing selected second device is selected according to the information about the at least one second device.

Specifically, the marking each media stream temporarily saved by the browser of the first device may be: assigning an identifier to each temporarily saved media stream.

Specifically, the parsing the selected media stream by using the browser of the first device may be: performing parsing processing, such as decompression and decoding, on the foregoing selected media stream by using the browser of the first device, so as to parse the foregoing selected media stream into a media stream that can be directly played on the selected second device.

Specifically, the sending a media stream obtained by parsing to the foregoing selected second device for presentation may be sending the media stream obtained by parsing to the foregoing selected second device by using a data line in a wired connection, or may also be sending the media stream obtained by parsing to the foregoing selected second device by using a transmission technology such as WiFi, HTTP, UPnP, DLNA, Bluetooth, NFC and/or an infrared technology.

Further, the processor 1201 is configured to execute the program stored in the memory 1202, and when the program is executed, operations are further included: reserving the foregoing website page or the foregoing web application; and when update information, which is sent by the foregoing website page or the foregoing web application, of the foregoing selected media stream is received, sending the foregoing update information to the selected second device by using the browser of the first device, so that the selected second device updates the foregoing selected media stream according to the foregoing update information, and continues to present an updated media stream. The foregoing update information may be sent to the selected second device in a same manner in which the media stream obtained by parsing is sent to the foregoing selected second device, and details are not described herein again.

In this embodiment, the media stream transferred to the foregoing selected second device for presentation includes one of media streams from different subpages, or one of multiple media streams from a same page.

In this embodiment, the user equipment may be a device that may use a browser to browse a web page and/or watch a video, such as a mobile phone, a PC, a tablet computer, a television, and/or a set top box.

When the browser of the first device receives multi-image media streams or starts multi-image media streams, the foregoing user equipment may implement that a browser transfers a media stream among multiple received media streams to a designated device for presentation.

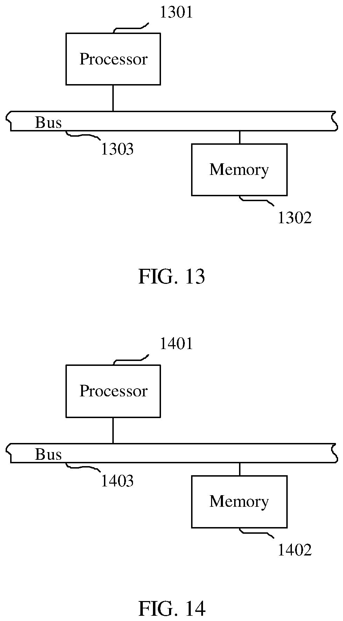

FIG. 13 is a schematic structural diagram of still another embodiment of a user equipment according to the present invention. The user equipment in this embodiment may be a first device for implementing a process of the embodiment shown in FIG. 2 of the present invention. As shown in FIG. 13, the user equipment may include a processor 1301, a memory 1302, and a bus 1303, where the processor 1301 and the memory 1302 communicate with each other by using the bus 1303; the memory 1302 is configured to store a program; and the processor 1301 is configured to execute the program stored in the memory 1302. When the program is executed, the following operations are included:
acquiring, by using a browser of the first device, information about at least one second device that may be configured to present a media stream;
temporarily saving, by using the browser of the first device, each media stream acquired by the foregoing browser of the first device from a website page or a web application;
marking each media stream temporarily saved by the foregoing browser of the first device; and
when it is determined that a media stream selected from the marked media streams is transferred to a selected second device for presentation, sending an identifier of the selected media stream to the selected second device by using the browser of the first device, so that the foregoing selected second device acquires the selected media stream from the foregoing first device according to the identifier of the selected media stream, and presents the selected media stream.

The foregoing selected second device is selected according to the information about the at least one second device.

Specifically, the sending an identifier of the selected media stream to the selected second device by using the browser of the first device may be: sending the identifier of the selected media stream to the foregoing selected second device by using a data line in a wired connection, or may also be sending the identifier of the selected media stream to the foregoing selected second device by using a transmission technology such as WiFi, HTTP, UPnP, DLNA, Bluetooth, NFC and/or an infrared technology.

Further, after the foregoing selected second device receives the identifier, which is sent by the browser of the first device, of the selected media stream, the second device may consider the first device as a Web server, then the second device uses the received identifier to request, by using an HTTP request, the first device for the media stream corresponding to the identifier, and finally, the first device responds to the HTTP request, and returns the requested media stream to the second device. Certainly, the requested media stream that is returned by the first device to the second device may be a media stream that has undergone parsing processing performed by the first device, and may be directly played on the second device.

Further, the processor 1301 is configured to execute the program stored in the memory 1302, and when the program is executed, operations are further included: reserving the foregoing website page or the foregoing web application; and when update information, which is sent by the foregoing website page or the foregoing web application, of the foregoing selected media stream is received, sending the foregoing update information to the selected second device by using the browser of the first device, so that the foregoing selected second device updates the foregoing selected media stream according to the foregoing update information, and continues to present an updated media stream. The foregoing update information may be sent to the selected second device in a same manner in which the identifier of the selected media stream is sent to the selected second device, and details are not described herein again.

In this embodiment, the media stream transferred to the foregoing selected second device for presentation includes one of media streams from different subpages, or one of multiple media streams from a same page.

In this embodiment, the user equipment may be a device that may use a browser to browse a web page and/or watch a video, such as a mobile phone, a PC, a tablet computer, a television, and/or a set top box.

When the browser of the first device receives multi-image media streams or starts multi-image media streams, the foregoing user equipment may implement that a browser transfers a media stream among multiple received media streams to a designated device for presentation.

FIG. 14 is a schematic structural diagram of still another embodiment of a user equipment according to the present invention. The user equipment in this embodiment may be a first device for implementing a process of the embodiment shown in FIG. 3 of the present invention. As shown in FIG. 14, the user equipment may include a processor 1401, a memory 1402, and a bus 1403, where the processor 1401 and the memory 1402 communicate with each other by using the bus 1403; the memory 1402 is configured to store a program; and the processor 1401 is configured to execute the program stored in the memory 1402. When the program is executed, the following operations are included:
acquiring, by using a browser of the first device, information about at least one second device that may be configured to present a media stream;
temporarily saving, by using the browser of the first device, each media stream acquired by the foregoing browser of the first device from a website page or a web application;
marking each media stream temporarily saved by the browser of the first device; and
when it is determined that a media stream selected from the marked media streams is transferred to a selected second device for presentation, sending a link of the foregoing selected media stream to the selected second device by using the browser of the first device, so that the selected second device acquires and plays, according to the foregoing link, the media stream corresponding to the foregoing link.

The foregoing selected second device is selected according to the information about the at least one second device.

Specifically, the sending a link of the foregoing selected media stream to the selected second device by using the browser of the first device may be: sending the link of the foregoing selected media stream to the foregoing selected second device by using a data line in a wired connection, or may also be sending the link of the foregoing selected media stream to the foregoing selected second device by using a transmission technology such as WiFi, HTTP, UPnP, DLNA, Bluetooth, NFC and/or an infrared technology.

Further, the processor 1401 is configured to execute the program stored in the memory 1402, and when the program is executed, operations are further included: reserving the foregoing website page or the foregoing web application; and when update information, which is sent by the foregoing website page or the foregoing web application, of the media stream corresponding to the foregoing link is received, sending the foregoing update information to the selected second device by using the browser of the first device, so that the foregoing selected second device updates, according to the foregoing update information, the media stream corresponding to the foregoing link, and continues to present an updated media stream. The foregoing update information may be sent to the selected second device in a same manner in which the link of the foregoing selected media stream is sent to the selected second device, and details are not described herein again.

In this embodiment, the media stream transferred by the browser of the first device to the second device for presentation includes one of media streams from different subpages, or one of multiple media streams from a same page.

In this embodiment, the user equipment may be a device that may use a browser to browse a web page and/or watch a video, such as a mobile phone, a PC, a tablet computer, a television, and/or a set top box.

When the browser of the first device receives multi-image media streams or starts multi-image media streams, the foregoing user equipment may implement that a browser transfers a media stream among multiple received media streams to a designated device for presentation.

Persons skilled in the art may understand that the accompanying drawings are merely schematic diagrams of an exemplary embodiment, and modules or processes in the accompanying drawings are not necessarily required for implementing the present invention.

Persons skilled in the art may understand that the modules in the apparatuses provided in the exemplary implementations may be distributed in the apparatuses in a manner according to the description of the embodiments, or may be located in one or more apparatuses different from those described in the exemplary implementations

The modules in the foregoing exemplary implementations may be combined into one module, or split into multiple submodules.

Finally, it should be noted that the foregoing exemplary implementations are merely intended for describing the technical solutions of the present invention, but not for limiting the present invention. Although the present invention is described in detail with reference to the foregoing exemplary implementations, persons of ordinary skill in the art should understand that they may still make modifications to the technical solutions described in the foregoing exemplary implementations or make equivalent replacements to some or all technical features thereof, provided that these modifications and equivalent replacements fall within the scope of the invention which is only defined by the appended claims.

## Claims

1. A method for separately transferring multiple media streams to different devices used by one user of a conference system comprising a conference system server, wherein each media stream of the multiple media streams relates to the conference and is sent to the conference system server by a different conference attendee, the method comprising:
acquiring (101), by a browser of a first device used by the user of the conference system, information about at least two second devices used by the user that may each be configured to present a media stream;
indicating, by the browser of the first device, to the conference system server, that the user is a multi-device user;
receiving, by the browser of the first device, the multiple media streams from the conference system server in the form of separate media streams that have not been mixed by the conference system server;
temporarily saving (102), by the browser of the first device, each media stream of the multiple media streams received from the conference system server;
marking (103), by the browser of the first device, each media stream temporarily saved by the browser of the first device, wherein the marking comprises assigning an identifier to each media stream temporarily saved by the browser of the first device; and
when it is determined that a media stream selected from the marked media streams is to be transferred to a selected one of the at least two second devices used by the user for presentation, sending, by the browser of the first device, a link of the selected media stream to the selected one of the at least two second devices, so that the selected one of the at least two second devices acquires and plays, according to the link, the media stream corresponding to the link, wherein the selected one of the at least two second devices is selected according to the information about the at least two second devices.

2. The method according to claim 1, wherein the multiple media streams are acquired by the browser of the first device from a website page or a web application and are from different subpages, or are from the same page.

3. The method according to claim 2, wherein the method further comprises:
reserving, by the browser of the first device, the website page or the web application; and
when the browser of the first device receives update information, which is sent by the website page or the web application, of the media stream corresponding to the link, sending, by the browser of the first device, the update information to the selected second device, so that the selected second device updates, according to the update information, the media stream corresponding to the link, and continues to present an updated media stream.

4. A first device for separately transferring multiple media streams to different devices used by one user of a conference system comprising a conference system server, wherein each media stream of the multiple media streams relates to the conference and is sent to the conference system server by a different conference attendee, the first device comprising:
a browser, configured to indicate to the conference system server that the user is a multi-device user, and to receive the multiple media streams from the conference system server in the form of separate media streams that have not been mixed by the conference system server;
an acquiring module (91, 1001), configured to acquire, by using the browser, information about at least two second devices that may each be configured to present a media stream;
a buffer module (92, 1002), configured to temporarily save, by using the browser, each media stream of the multiple media streams received by the browser from the conference system server ;
a marking module (93, 1003), configured to mark, by using the browser, each media stream temporarily saved by the browser, wherein the marking comprises assigning an identifier to each media stream temporarily saved by the browser; and
a transferring module (94, 1004), configured to: when it is determined that a media stream selected from the media streams marked by the marking module (93, 1003) is to be transferred to a selected one of the at least two second devices for presentation, send a link of the selected media stream to the selected one of the at least two second devices by using the browser of the first device, so that the selected one of the at least two second devices acquires and plays, according to the link, the media stream corresponding to the link, wherein the selected one of the at least two second devices is selected according to the information about the at least two second devices.

5. The first device according to claim 4, wherein the multiple media streams are acquired by the browser of the first device from a website page or a web application and are from different subpages, or are from the same page.

6. The first device according to claim 5, wherein the first device further comprises a reserving module (95, 1005), wherein
the reserving module (95, 1005) is configured to reserve the website page or the web application; and
the transferring module (94, 1004) is further configured to: when the acquiring module (91, 1001) receives update information, which is sent by the website page or the web application, of the media stream corresponding to the link, send the update information to the selected second device by using the browser of the first device, so that the selected second device updates, according to the update information, the media stream corresponding to the link, and continues to present an updated media stream.

## Patentansprüche

1. Verfahren zum separaten Transferieren mehrerer Medienströme zu verschiedenen Vorrichtungen, die durch einen Benutzer eines Konferenzsystems benutzt werden, das einen Konferenzsystemserver umfasst, wobei jeder Medienstrom der mehreren Medienströme die Konferenz betrifft und durch einen anderen Konferenzteilnehmer zu dem Konferenzsystemserver gesendet wird, wobei das Verfahren Folgendes umfasst:
Beschaffen (101) von Informationen über mindestens zwei zweite durch den Benutzer benutzte Vorrichtungen, die jeweils dafür ausgelegt sein können, einen Medienstrom zu präsentieren, durch einen Browser einer ersten durch den Benutzer des Konferenzsystem benutzten Vorrichtung;
dem Konferenzsystemserver durch den Browser der ersten Vorrichtung angeben, dass der Benutzer ein Mehrvorrichtungsbenutzer ist;
Empfangen der mehreren Medienströme von dem Konferenzsystemserver durch den Browser der ersten Vorrichtung in Form von separaten Medienströmen, die nicht durch den Konferenzsystemserver gemischt wurden;
vorübergehendes Abspeichern (102) jedes Medienstroms der mehreren Medienströme, die von dem Konferenzsystemserver empfangen werden, durch den Browser der ersten Vorrichtung;
Markieren (103) jedes vorübergehend durch den Browser der ersten Vorrichtung abgespeicherten Medienstroms durch den Browser der ersten Vorrichtung, wobei das Markieren Vergeben einer Kennung an jeden vorübergehend durch den Browser der ersten Vorrichtung abgespeicherten Medienstrom umfasst; und
wenn bestimmt wird, dass ein aus den markierten Medienströmen ausgewählter Medienstrom zu einer ausgewählten der mindestens zwei zweiten durch den Benutzer benutzten Vorrichtungen zur Präsentation transferiert werden soll, Senden einer Verknüpfung des ausgewählten Medienstroms zu der ausgewählten einen der mindestens zwei zweiten Vorrichtungen durch den Browser der ersten Vorrichtung, so dass die ausgewählte eine der mindestens zwei zweiten Vorrichtungen gemäß der Verknüpfung den der Verknüpfung entsprechenden Medienstrom beschafft und wiedergibt, wobei die ausgewählte eine der mindestens zwei zweiten Vorrichtungen gemäß den Informationen über die mindestens zwei zweiten Vorrichtungen ausgewählt wird.

2. Verfahren nach Anspruch 1, wobei die mehreren Medienströme durch den Browser der ersten Vorrichtung von einer Website-Seite oder einer Web-Anwendung beschafft werden und von verschiedenen Unter-Seiten stammen oder von derselben Seite stammen.

3. Verfahren nach Anspruch 2, wobei das Verfahren ferner Folgendes umfasst:
Reservieren der Website-Seite oder der Web-Anwendung durch den Browser der ersten Vorrichtung; und
wenn der Browser der ersten Vorrichtung durch die Website-Seite oder die Web-Anwendung gesendete Aktualisierungsinformationen des der Verknüpfung entsprechenden Medienstroms empfängt, Senden der Aktualisierungsinformationen zu der ausgewählten zweiten Vorrichtung durch den Browser der ersten Vorrichtung, so dass die ausgewählte zweite Vorrichtung gemäß den Aktualisierungsinformationen den der Verknüpfung entsprechenden Medienstrom aktualisiert und weiter einen aktualisierten Medienstrom präsentiert.

4. Erste Vorrichtung zum separaten Transferieren mehrerer Medienströme zu verschiedenen Vorrichtungen, die durch einen Benutzer eines Konferenzsystems benutzt werden, das einen Konferenzsystemserver umfasst, wobei jeder Medienstrom der mehreren Medienströme die Konferenz betrifft und durch einen anderen Konferenzteilnehmer zu dem Konferenzsystemserver gesendet wird, wobei die erste Vorrichtung Folgendes umfasst:
einen Browser, der dafür ausgelegt ist, dem Konferenzsystemserver anzugeben, dass der Benutzer ein Mehrfachvorrichtungsbenutzer ist, und die mehreren Medienströme von dem Konferenzsystemserver in Form von separaten Medienströmen, die nicht durch den Konferenzsystemserver gemischt wurden, zu empfangen;
ein Beschaffungsmodul (91, 1001), ausgelegt zum Beschaffen von Informationen über mindestens zwei zweite Vorrichtungen, die jeweils dafür ausgelegt sein können, einen Medienstrom zu präsentieren, durch Verwendung des Browsers;
ein Puffermodul (92, 1002), ausgelegt zum vorübergehenden Abspeichern jedes Medienstroms der mehreren durch den Browser von dem Konferenzsystemserver empfangenen mehreren Medienströme durch Verwendung des Browsers;
ein Markierungsmodul (93, 1003), ausgelegt zum Markieren jedes vorübergehend durch den Browser abgespeicherten Medienstroms durch Verwendung des Browsers, wobei das Markieren Vergeben einer Kennung an jeden vorübergehend durch den Browser abgespeicherten Medienstrom umfasst; und
ein Transferiermodul (94, 1004), das für Folgendes ausgelegt ist: wenn bestimmt wird, dass ein aus dem durch das Markierungsmodul (93, 1003) markierten Medienströmen ausgewählter Medienstrom zu einer ausgewählten einen der mindestens zwei zweiten Vorrichtungen zur Präsentation transferiert werden soll, Senden einer Verknüpfung des ausgewählten Medienstroms zu der ausgewählten einen der mindestens zwei zweiten Vorrichtungen durch Verwendung des Browsers der ersten Vorrichtung, so dass die ausgewählte eine der mindestens zwei zweiten Vorrichtungen gemäß der Verknüpfung den der Verknüpfung entsprechenden Medienstrom beschafft und wiedergibt, wobei die ausgewählte eine der mindestens zwei zweiten Vorrichtungen gemäß den Informationen über die mindestens zwei zweiten Vorrichtungen ausgewählt wird.

5. Erste Vorrichtung nach Anspruch 4, wobei die mehreren Medienströme durch den Browser der ersten Vorrichtung von einer Website-Seite oder einer Web-Anwendung beschafft werden und von verschiedenen Unter-Seiten stammen oder von derselben Seite stammen.

6. Erste Vorrichtung nach Anspruch 5, wobei die erste Vorrichtung ferner ein Reserviermodul (95, 1005) umfasst, wobei das Reserviermodul (95, 1005) ausgelegt ist zum Reservieren der Website-Seite oder der Web-Anwendung; und
das Transferiermodul (94, 1004) ferner für Folgendes ausgelegt ist: wenn das Beschaffungsmodul (91, 1001) Aktualisierungsinformationen des der Verknüpfung entsprechenden Medienstroms empfängt, die durch die Website-Seite oder die Web-Anwendung gesendet werden, Senden der Aktualisierungsinformationen zu der ausgewählten zweiten Vorrichtung durch Verwendung des Browsers der ersten Vorrichtung, so dass die ausgewählte zweite Vorrichtung gemäß den Aktualisierungsinformationen den der Verknüpfung entsprechenden Medienstrom aktualisiert und weiter einen aktualisierten Medienstrom präsentiert.

## Revendications

1. Procédé pour transférer séparément de multiples flux de média à différents dispositifs utilisés par un seul utilisateur d'un système de conférence comportant un serveur de système de conférence, chaque flux de média parmi les multiples flux de média se rapportant à la conférence et étant envoyé au serveur de système de conférence par un participant différent à la conférence, le procédé comportant :
l'acquisition (101), par un navigateur d'un premier dispositif utilisé par l'utilisateur du système de conférence, d'informations concernant au moins deux deuxièmes dispositifs utilisés par l'utilisateur dont chacun pourrait être configuré pour présenter un flux de média ;
une indication, par le navigateur du premier dispositif, au serveur de système de conférence, du fait que l'utilisateur est un utilisateur multi-dispositifs ;
la réception, par le navigateur du premier dispositif, des multiples flux de média en provenance du serveur de système de conférence sous la forme de flux de média séparés qui n'ont pas été mélangés par le serveur de système de conférence ;
la sauvegarde temporaire (102), par le navigateur du premier dispositif, de chaque flux de média parmi les multiples flux de média reçus en provenance du serveur de système de conférence ;
le marquage (103), par le navigateur du premier dispositif, de chaque flux de média sauvegardé temporairement par le navigateur du premier dispositif, le marquage comportant l'affectation d'un identifiant à chaque flux de média sauvegardé temporairement par le navigateur du premier dispositif ; et
lorsqu'il est déterminé qu'un flux de média sélectionné parmi les flux de média marqués doit être transféré à un dispositif sélectionné parmi lesdits au moins deux deuxièmes dispositifs utilisés par l'utilisateur en vue d'une présentation, l'envoi, par le navigateur du premier dispositif, d'un lien du flux de média sélectionné au dispositif sélectionné parmi lesdits au moins deux deuxièmes dispositifs, de telle sorte que le dispositif sélectionné parmi lesdits au moins deux deuxièmes dispositifs acquière et reproduise, selon le lien, le flux de média correspondant au lien, le dispositif sélectionné parmi lesdits au moins deux deuxièmes dispositifs étant sélectionné d'après les informations concernant lesdits au moins deux deuxièmes dispositifs.

2. Procédé selon la revendication 1, les multiples flux de média étant acquis par le navigateur du premier dispositif à partir d'une page de site web ou d'une application web et provenant de sous-pages différentes, ou provenant de la même page.

3. Procédé selon la revendication 2, le procédé comportant en outre :
la réservation, par le navigateur du premier dispositif, de la page de site web ou de l'application web ; et
lorsque le navigateur du premier dispositif reçoit des informations de mise à jour, qui sont émises par la page de site web ou l'application web, du flux de média correspondant au lien, l'envoi, par le navigateur du premier dispositif, des informations de mise à jour au deuxième dispositif sélectionné, de telle sorte que le deuxième dispositif sélectionné mette à jour, d'après les informations de mise à jour, le flux de média correspondant au lien, et continue à présenter un flux de média mis à jour.

4. Premier dispositif destiné à transférer séparément de multiples flux de média à différents dispositifs utilisés par un seul utilisateur d'un système de conférence comportant un serveur de système de conférence, chaque flux de média parmi les multiples flux de média se rapportant à la conférence et étant envoyé au serveur de système de conférence par un participant différent à la conférence, le premier dispositif comportant :
un navigateur, configuré pour indiquer au serveur de système de conférence que l'utilisateur est un utilisateur multi-dispositifs, et pour recevoir les multiples flux de média en provenance du serveur de système de conférence sous la forme de flux de média séparés qui n'ont pas été mélangés par le serveur de système de conférence :
un module (91, 1001) d'acquisition, configuré pour acquérir, en utilisant le navigateur, des informations concernant au moins deux deuxièmes dispositifs dont chacun pourrait être configuré pour présenter un flux de média ;
un module (92, 1002) de tampon, configuré pour sauvegarder temporairement, en utilisant le navigateur, chaque flux de média parmi les multiples flux de média reçus par le navigateur en provenance du serveur de système de conférence ;
un module (93, 1003) de marquage, configuré pour marquer, en utilisant le navigateur, chaque flux de média sauvegardé temporairement par le navigateur, le marquage comportant l'affectation d'un identifiant à chaque flux de média sauvegardé temporairement par le navigateur ; et
un module (94, 1004) de transfert, configuré pour : lorsqu'il est déterminé qu'un flux de média sélectionné parmi les flux de média marqués par le module (93, 1003) de marquage doit être transféré à un dispositif sélectionné parmi lesdits au moins deux deuxièmes dispositifs en vue d'une présentation, envoyer un lien du flux de média sélectionné au dispositif sélectionné parmi lesdits au moins deux deuxièmes dispositifs en utilisant le navigateur du premier dispositif, de telle sorte que le dispositif sélectionné parmi lesdits au moins deux deuxièmes dispositifs acquière et reproduise, selon le lien, le flux de média correspondant au lien, le dispositif sélectionné parmi lesdits au moins deux deuxièmes dispositifs étant sélectionné d'après les informations concernant lesdits au moins deux deuxièmes dispositifs.

5. Premier dispositif selon la revendication 4, les multiples flux de média étant acquis par le navigateur du premier dispositif à partir d'une page de site web ou d'une application web et provenant de sous-pages différentes, ou provenant de la même page.

6. Premier dispositif selon la revendication 5, le premier dispositif comportant en outre un module (95, 1005) de réservation, le module (95, 1005) de réservation étant configuré pour réserver la page de site web ou l'application web ; et
le module (94, 1004) de transfert étant en outre configuré pour :
lorsque le module d'acquisition (91, 1001) reçoit des informations de mise à jour, qui sont émises par la page de site web ou l'application web, du flux de média correspondant au lien, envoyer les informations de mise à jour au deuxième dispositif sélectionné en utilisant le navigateur du premier dispositif, de telle sorte que le deuxième dispositif sélectionné mette à jour, d'après les informations de mise à jour, le flux de média correspondant au lien, et continue à présenter un flux de média mis à jour.
